# EUROPEAN PATENT APPLICATION

(11) **EP 1 040 990 A2**
(43) Date of publication of application: **04.10.2000**
(21) Application number: 00830001.4
(22) Date of filing: 04.01.2000
(51) Int. Cl.: B62M 3/04, B62M 1/02

(54) **Improved thrust system for bicycles**

(30) Priority: 11.01.1999 IT PV990002
(71) Applicant: Felisari, Gianni, 27029 Vigevano (PV) (IT)
(72) Inventor: Felisari, Gianni, 27029 Vigevano (PV) (IT)

(57) **Abstract**

An improved thrust system for bicycles consists of a handlebar support (1) integral to the frame, a pair of pedals (11,24), and a ring drive gear (13) operationally linked to the primary mechanical system of the handlebar support and a saddle (38) operationally linked to the secondary mechanical system of the frame, whereby the primary mechanical system imposes a rotation centre for the pedals (11,24) independently from the rotation centre of the ring gear (13) and where the secondary mechanical system allows independent support rotation and upward and downward movement relative to the vertical symmetry of the bicycle.

## Description

This invention aims to improve the thrust propulsion of bicycles.

The bicycles currently in production and on sale to the public, have a mechanical propulsion system generated from the pedals and connected via a chain to a cog mounted on the back wheel.

This system is made up of a pair of pedals, their support arms and an incorporated ring gear which transmit the thrust to the back wheel, via a chain.

As is commonly known adjusting the height of the saddle will permit the athlete to use muscular power more efficiently, as this allows a complete and correct extension of the muscle group in the leg during the pedalling movement enabling the athlete to exert maximum pressure.

Although this method solves the technical problems inherent in the generation of thrust and permits an optimum use of muscle power it present some disadvantages.

The power generated by the pedals does not vary equally to the muscular force used when pedalling since the geometry of the mechanical parts remains constant. This means that the centre point of the rotation of the pedals coincides with the central rotation point of the ring gear and the thrust generated by the athlete is transformed into a constant stroke.

The height adjustment of the saddle also remains constant even though the position, when cycling uphill and downhill, is no longer efficient or comfortable. The typical position assumed to improve the pedal stroke when cycling uphill removes the support the saddle offers and the downhill position is aerodynamically inefficient.

Saddle adjustment is not allowed during a race therefore further decreasing the possibility of improving performance based on the requirements of the cyclist and the type of terrain covered during the race.

The aim of this invention is therefore to nullify the difficulties caused by the present technical limitations.

The objective of the invention is to modify the drive system to ensure greater efficiency at a modest cost with a system which can be fitted on every type of bicycle both for professional and every day use.

In short, an improved thrust for bicycles consists of a handlebar support integral to the frame, a pair of pedals, and a ring drive gear operationally linked to the primary mechanical system of the handlebar support and a saddle operationally linked to the secondary mechanical system of the frame, whereby the primary mechanical system imposes a rotation centre for the pedals independently from the rotation centre of the ring gear and where the secondary mechanical system allows independent support rotation and upward and downward movement relative to the vertical symmetry of the bicycle.

The improved thrust system for bicycles has the following characteristics. 1.

Further advantages inherent in the improved thrust system are outlined in the enclosed application.

The characteristics, aims and advantages of this invention will be better explained by the following description which refers to the technical drawings attached and indicates the recommended method of application for this invention, which can, however be modified.

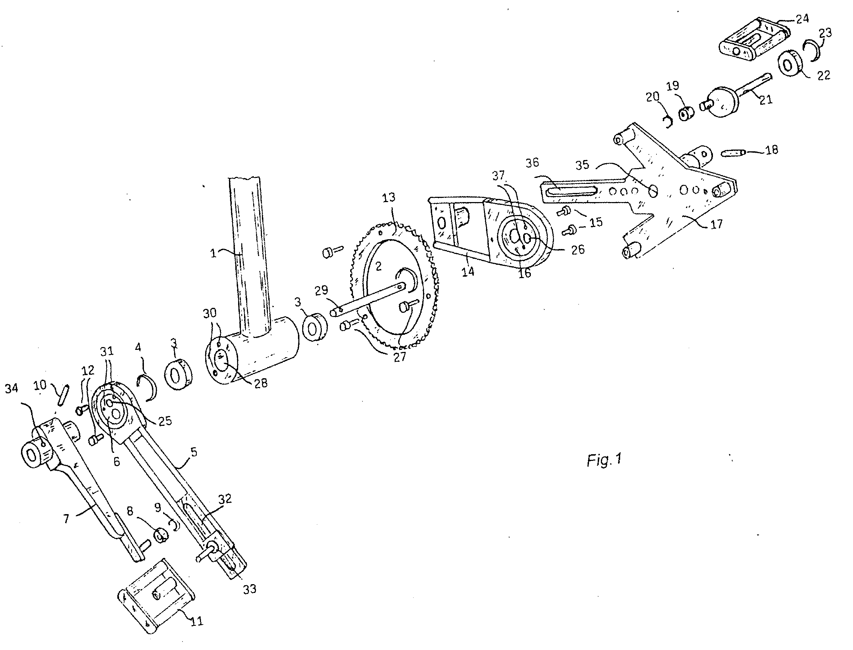

Diagram 1 is a prospective drawing of the mechanical components of the new system.

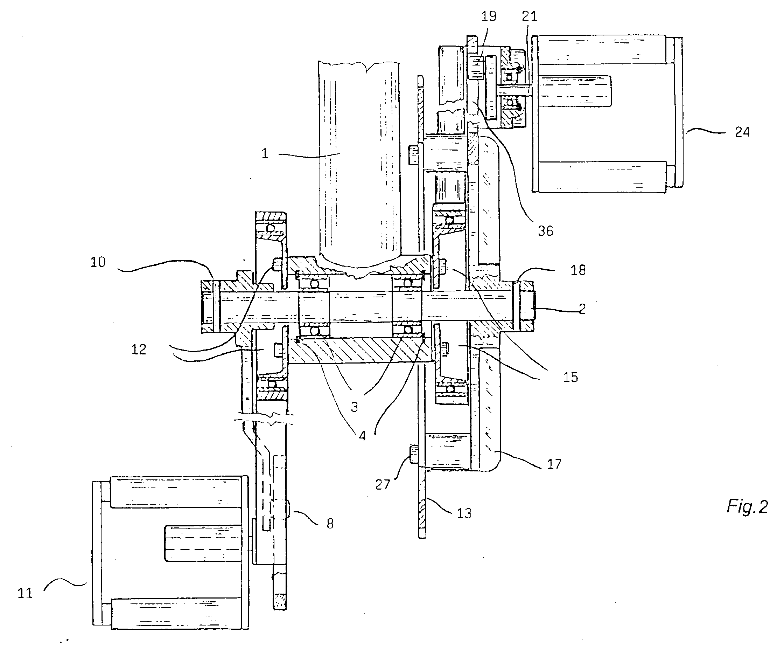

Diagram 2 is a vertical dissection of the same mechanical components mounted on the bicycle frame.

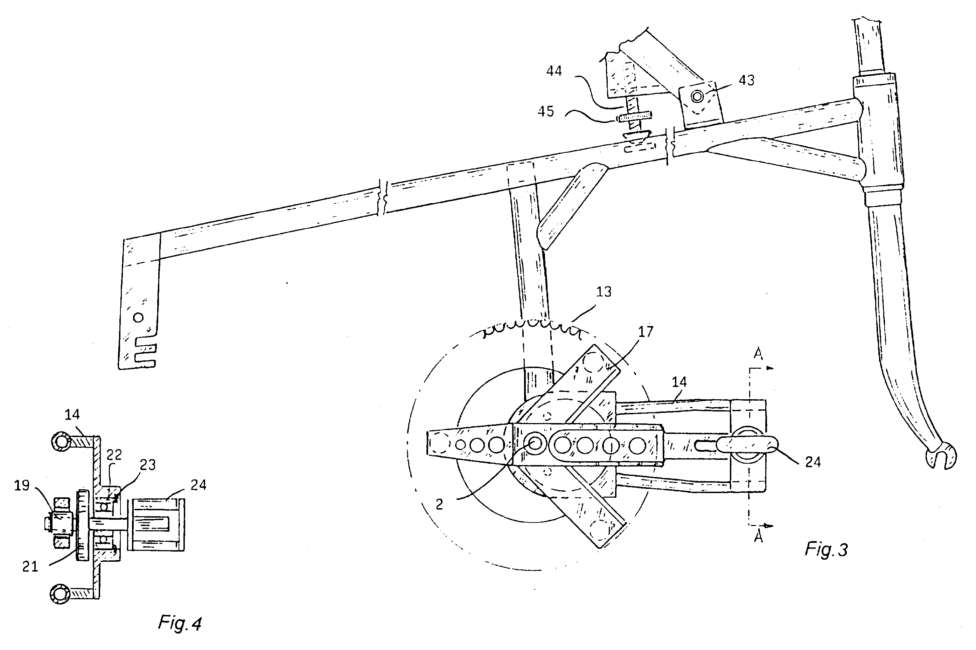

Diagram 3 is a partial lateral view of the bicycle using the new system.
Diagram 4 is a dissection along the line A-A as previously illustrated in diagram 3.

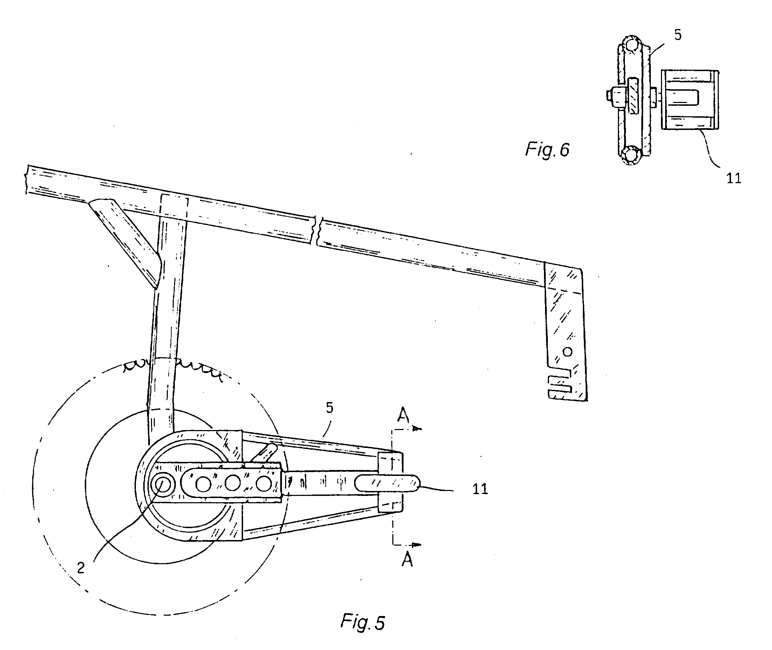

Diagram 5 is another partial lateral view of the bicycle using the new system.
Diagram 6 is a dissection along the line A-A as previously illustrated in diagram 5.
Diagram 7 is a lateral view of some details of the new system.

The above mentioned diagrams refer to an improved thrust system for bicycles, which consists of a mechanical group incorporated in the bicycle frame.

More precisely an inverted "T" shaped handlebar support (1) is incorporated into the frame by means of a hole (28) through the horizontal part which is fitted with a pin (2) supported by two bearings (3) slotted into the handlebar support (1).

At each end of the pin (2) there is a hole (29) where a securing plug is housed, while at the two horizontal extremities of the handlebar support (1) there is a pair of threaded holes (30).

On one side of the bicycle - for example on the left hand side, linked to pin (2) the operational order of the design is as follows: a primary pedal support arm (5), connected mechanically to a pedal (11) and a pull bar (7).

Pedal support arm (5) is designed with a bearing (6) at each extremity and a corresponding hole (25) for the pin (2), two holes (31) for attaching the handlebar support screws (12) to the handlebar support (1) through the corresponding holes (30), the above mentioned bearing (6) and another hole larger than hole (25) whose purpose is to reduce weight.

At the other extremity, the pedal support arm (5) has a slot (32) which allows the pull bar (7) to move up and down via a supporting ring (8) and relative blocking nut (9).

The slot (32) is designed with a cam operated bearing (33) which allows the pedal to revolve on an irregular axis.

The pull bar (7) is connected to the pin (2) by a peg (10) which passes through hole (34) drilled through pull bar (7) and into dropped hole (29), while at the opposite end a pin is inserted into supporting ring (8), which, a previously described slides within slot (32).

On the opposite side of the bicycle, the design has a ring gear (13) a second pedal support arm (14), another pull bar (17) and the second pedal (24).

The ring gear which transmits the drive torque to the back wheel through a chain which is not shown in the illustration, has three holes along its perimeter which are used to connect it to the pull bar (17) using three screws (27).

The pull bar (17) has a hole (35) bored through it to allow the passage of the pin (2) which is then fixed into position with a securing peg (18), a number of weight reducing holes and, at one end, a slot (36) which allows supporting ring (19) to slide up and down.

The other end of pull bar (17) is made in the shape of a flat polygonal which contains housings for three screws (27), these housings are designed to fix the ring gear in such a way that during use its centre of rotation remains compatible with the symmetrical longitudinal axis of the pin (2).

A lever with a bearing (16) at one extremity identical to bearing (6) previously described, is fixed between ring gear (13) and pull bar (17).

This is designed with a hole (26) for the passage of pin (2), two holes (37) for matching screws (15) which fix bearing (16) to the handlebar support bar (1), and another larger weight-reducing hole.

Finally the pedal (24) is connected to pedal support arm (14) and pull bar (17) by a shaft (21) with a disk-shaped block at one end fitted with a cam bearing.

During assembly this is connected to pedal support arm (14) by means of a bearing (22) held in position by a locking device (23) while support ring (19) held in position by locking device (20) allows the shaft (21) and other parts connected to it to move through slot (36) of the pull bar (17).

At the opposite end of shaft (21) the pedal (24) is fitted to its axis pin in the usual way.

As an alternative procedure pedal support arm (5) can be designed in the same way as pedal support arm (14) (see previous explanation), therefore without slot (32) which in this case is found on pull bar (7), which then resembles pull bar (17) without the flat polygonal feature.

In this case the pedal (11) will connected to pedal support arm (5) and pull bar (7) using the same mechanical pieces used to connect pedal (24) to pedal support arm (14) and pull bar (17).

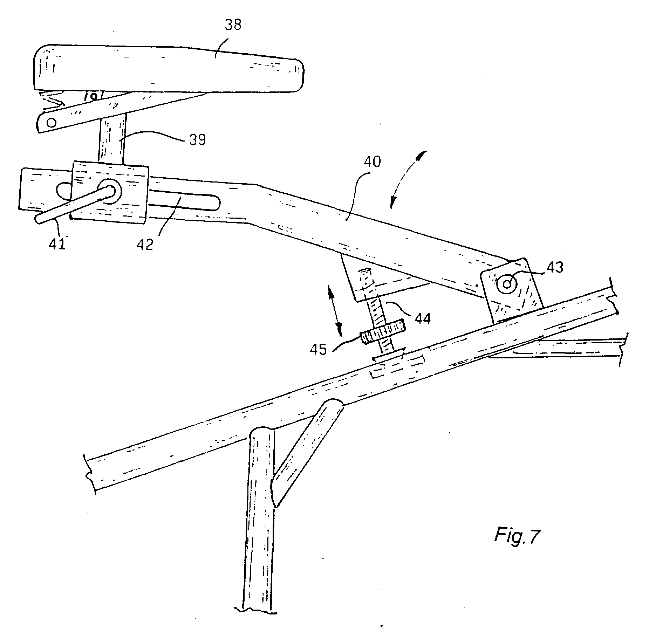

Another characteristic of the improved thrust system, illustrated in diagram 7, consists of a saddle (38) connected to the bicycle frame by a number of mechanical parts which allow traverse and rotational movement on the bicycle's vertical plane.

In detail the saddle (38) is held in place by a support pin (39) that is able to move within a tube (40). Its position is then read by a blocking nut inserted in a slot (42) effected within tube (40) and activated by lever (41).

The tube (40) is then fitted onto the frame and the rotating movement obtained by the use of a retraining clasp is regulated by a screw-in device (44) activated by a knob/handlebar grip (45).

Both movements of saddle (38) are possible, thus improving the athletes performance, especially when going up and downhill.

When in motion, the pedal support arms (5 and 14) revolve around pin (2) on bearings (6 and 16) and when in neutral, as these bearings, fixed to the handlebar support, activate pull bars (7 and 17) thanks to the movement of support rings (8 and 19) thus rotating the ring gear.

The momentum of the rotation transmitted through the pedalling movement of the cyclist presents a effective variable stroke during the revolution of pedal support arms (5 and 14) because the rotational centre of the pedals does not coincide with the rotational axis of ring gear (13).

In detail, assuming that the point of reference for the angle of rotation of the pedals, is a horizontal plane drawn through hole (28) in handle bar support (1) measured in an anticlockwise direction which coincides with the symmetrical, longitudinal plane of pin (2), or rather with the ring gear (13)'s rotational plane, where 0° is given to be in the direction of the back wheel, the lowered stroke attains its maximum value in the 0° position where it is equal to the length of the pedal support arm plus the distance between the rotational centre of the pedals and where the horizontal plane is taken as point of reference as has already been defined, while the minimum value is obtained in the position of 180° where it is equal to the length of the pedal support arm minus the distance between the rotational centre of the pedals and the horizontal plane taken as point of reference.

In this way, while the cyclist exerts an equal muscular force to that used for a traditional bicycle the improved thrust system transmits more power in the 270° - 90° position.

Alternatively it should be noted that the peripheral speed of the pedal support arms varies during rotation when the speed of the bicycle is constant, because although the angular speed is constant the stroke varies.

In particular the pedal support arm speed is lower during the half revolution between 270° and 90° and higher during the other half revolution.

Because of the resulting dragging movement each of the two pedal support arms, moving independently tends to hang back from the other. This delay attains its maximum value on the 90° - 270° plane and its minimum along the 0° - 180° plan: for this reason the pedals are fitted with cam bearings.

During use the saddle (38) position is variable, acting on lever (41) and knob/grip (45) thus allowing the cyclist to obtain both the maximum muscular efficiency and the optimum technical position during thrust on the pedals, or rather the aerodynamic position when travelling downhill and almost standing upright when climbing.

Finally, by varying the geometry of the improved thrust system a personalised use of the vehicle based on diversified performance can be obtained.

Naturally, numerous other alterations, adaptations and variants could be applied to this design without radically changing the basic invention as it is defined and illustrated in the enclosed application.

## Claims

1. Improved thrust for bicycles consisting of a handlebar support (1) integral to the frame, a pair of pedals (11 and 24), and a ring gear (13) operationally linked to the primary mechanical system of the handlebar support and a saddle (38) operationally linked to the secondary mechanical system of the frame, whereby the primary mechanical system imposes a rotation centre for the pedals (11 and 24) independently from the rotation centre of the ring gear (13) and where the secondary mechanical system allows the saddle (38) independent rotation and upward and downward movement relative to the vertical symmetry of the bicycle.

2. Improved thrust system for bicycles as outlined in application 1, distinguished by primary mechanical components which consist of at least one pin (2) linked to the aforementioned handlebar support (1) with a hole (29) at each extremity, a pair of pedal support arms (5 and 14) and two pull bars (7 and 17).

3. Improved thrust system for bicycles as outlined in application 2, distinguished by an inverted T"-shaped handlebar support (1) with a hole (28) bored through to house the aforementioned pin (2) and two threaded holes (30) positioned one on each side of hole (28).

4. Improved thrust system for bicycles as outlined in application 2, distinguished by the aforementioned pin (2) and connected internally to the handlebar support (1) by a pair of bearings and a blocking nut.

5. Improved thrust system for bicycles as outlined in application 3, distinguished by two pedal support arms each of which has a bearing (6 and 16) fitted at both extremities with a hole (25 and 26) which connects it to pin (2), at least one weight reducing hole and another two holes (31 and 37) for connecting screws (12 and 15) which are inserted into the two threaded holes (12 and 15) on the handlebar support (1).

6. Improved thrust system for bicycles as outlined in application 5, distinguished by the first of two pedal support arms (5) with a slot (32) and a cam bearing (33) on the opposite end to bearing (6) which are paired with one of the pedals (11) which has an irregular rotational axis whereby the first pull bar (7) connected to the first of two pedal support arms (5) has a peg (10) which fits into one of the holes (29) on the aforementioned pin (2), and at the opposite end into a supporting ring (8) fixed in place by a blocking nut (9) which runs along the aforementioned slot (32) resulting in a thrust producing convergence between the aforementioned pedal support arm (5) and the aforementioned pull bar (7).

7. Improved thrust system for bicycles outlined in application 5, distinguished by the first of two pull bars coupled with the first of two pedal support arms designed with a peg (10) at one end which fits into one of the holes (29) in the aforementioned pin (2) while at the opposite end there is a slot and, in a central position, a hole through which the pin (2) passes and is then held in place by the aforementioned peg. Linked to the first of the two pull bars there is a pedal with an irregular rotational axis obtained by fitting a shaft designed with a circular mass and a cam bearing at one end. The shaft is connected, via a ring support and a blocking nut to the slot in the aforementioned pull bar and to a housing at one end of the aforementioned pedal support arm by a bearing and a blocking nut.

8. Improved thrust system for bicycles as outlined in application 5, distinguished by the second of the two pedal support arms (14) which is placed between the ring gear (13) and the second of the two pull bars (17). The second pull bar (17) is designed with a flat polygonal shape at one end with three holes for three screws (27), and at the other end a slot (36) with a hole (35) bored through the centre for pin (2) which passes through and is secured by a peg (18) which corresponds to one of the aforementioned holes (29) at the end.

9. Improved thrust system for bicycles as outlined in application 8, distinguished by the second of the two pull bars (17) which is paired with one of the two pedals (24) having an irregular rotational axis obtained by the use of a shaft (21) designed with a circular block and a cam bearing at one end whereby the aforementioned shaft (21) is linked to the aforementioned slot (36) in the aforementioned pull bar (17), by way of a support ring (19) and a blocking nut (20) and to a housing at one end of the aforementioned second pedal support arm, by way of another bearing (22) and a blocking nut (23).

10. Improved thrust system for bicycles as outlined in application 1, distinguished by the secondary mechanical parts/system consisting of a support pin (39) and a saddle (38) connected to a tube (40) which allows upward and downward movement, being held in position by a sliding mechanism mounted through a slot (42) in the tube (40), which is activated by using an external lever (41). The aforementioned tube (40) is connected to the bicycle frame by a hinge (43) and is set into position at an angle relative to the frame by a screw (44) which is regulated by a knob/grip (45).
